# EUROPÄISCHE PATENTSCHRIFT

(11) **EP 3 539 912 B1**
(45) Veröffentlichungstag und Bekanntmachung des Hinweises auf die Patenterteilung: **03.07.2024**
(21) Anmeldenummer: 19159915.8
(22) Anmeldetag: 28.02.2019
(51) Int. Cl.: B65G 59/10

(54) **VERFAHREN UND VORRICHTUNG ZUM SANFTEN ABSETZEN VON SCHALEN**
METHOD AND APPARATUS FOR SOFT UNLOADING OF TRAYS
PROCÉDÉ ET DISPOSITIF DE DÉPÔT DOUX DE COQUES

(30) Priorität: 16.03.2018 DE 102018204018
(43) Veröffentlichungstag der Anmeldung: 18.09.2019
(73) Patentinhaber: MULTIVAC Sepp Haggenmüller SE & Co. KG, 87787 Wolfertschwenden (DE)
(72) Erfinder: FICKLER, Bernhard, 87749 Hawangen (DE); OSTERRIEDER, Franz, 87730 Bad Grönenbach (DE); WIEDENMAYER, Oliver, 87700 Memmingen (DE)
(74) Vertreter: Grünecker Patent- und Rechtsanwälte PartG mbB

(56) Entgegenhaltungen:
- EP-A1- 3 246 277
- EP-A1- 3 366 616
- CN-A- 104 071 557
- DE-A1- 4 315 100
- DE-U1-202014 008 161
- GB-A- 2 468 667
- JP-A- H08 217 249
- US-A- 3 741 410
- US-A- 4 288 003

## Beschreibung

Die vorliegende Erfindung betrifft ein Verfahren, mittels welchem Schalen aus einem Stapel von Schalen einzeln oder gruppenweise, sanft auf einer Transporteinheit abgesetzt werden können, sowie eine entsprechende Vorrichtung zum sanften Absetzen von Schalen auf einer Transporteinheit.

Zum Verpacken einer Vielzahl von Konsumgütern, insbesondere von Lebensmitteln, werden stapelbare Verpackungen verwendet. Beispiele hierfür sind die im Bereich von Fleischprodukten üblichen, nach dem Befüllen mit einer Folie versiegelbaren Kunststoffschalen. Oftmals werden die Verpackungen gestapelt gelagert und versandt, um Platz zu sparen. Zum Befüllen mit Produkten müssen die Verpackungen dann aber einzeln oder gruppenweise einer Befüllstation zugeführt werden.

Es ist beispielsweise aus der Praxis bekannt, mittels einer einen Stapel von Kunststoffschalen aufnehmenden Abstapelvorrichtung in einem bestimmten zeitlichen Abstand jeweils die unterste Schale des Stapels auf ein unter der Abstapelvorrichtung verlaufendes Transportband abzuwerfen. Die derart aus dem Stapel separierten Schalen werden dann mit dem Transportband zu einer Befüllstation verbracht, wo sie mit den gewünschten Produkten, insbesondere Lebensmitteln, befüllt werden. Dann werden die befüllten Schalen weiter zu einer Siegelstation transportiert, wo sie mit einer Kunststofffolie versiegelt werden.

Eine Abstapelvorrichtung, mit der in einem festen zeitlichen Intervall jeweils die unterste Schale aus einem Schalenstapel auf ein unter der Abstapelvorrichtung hindurchgeführtes Transportband abgeworfen wird, ist aus der EP 1 685 047 B1 bekannt.

Nachteilig beim Abwerfen von Schalen, insbesondere Verpackungsschalen, aus einem Stapel auf ein unter dem Stapel durchlaufendes Transportband ist, dass insbesondere leichte Schalen nach dem Auftreffen auf das Transportband von diesem abprallen können. Die Schale ist dann ggf. nicht exakt auf dem Transportband gemäß einer gewünschten Position für einen anschließenden Befüllvorgang positioniert. Dabei wird bereits bei einem geringfügigen Abprall die Orientierung der Schale auf dem Transportband unvorhersehbar, was bei nachfolgenden Verarbeitungsschritten nachteilig sein kann. Insbesondere können dann zusätzliche Arbeitsschritte nötig sein, um die unregelmäßig auf dem Transportband positionierten Schalen in eine präzise Position für den Befüllvorgang zu bringen.

Wenn die abgeworfene Schale vom Transportband abprallt, d.h. darauf nicht sofort stillsteht, kann dies auch zu einem unregelmäßigen Durchrutschen des Transportbands unter den abgeworfenen Schalen führen. Dies ist deshalb problematisch, weil es dann zu unregelmäßigen Abständen hintereinander abgeworfener Schalen in Transportrichtung kommen kann.

DE 20 2014 008 161 U1 zeigt eine weitere Abstapelvorrichtung, anhand welcher Schalen einzeln von einem Stapel mittels vier Entstaplerschrauben auf eine Transporteinrichtung abgeworfen und in einer Transportrichtung abtransportiert werden, um unter dem Stapel Platz für eine neue Schale zu machen. DE 20 2014 008 161 U1 offenbart ein Verfahren zum Betrieb einer Schalenfördervorrichtung nach dem Oberbegriff des Anspruchs 1 sowie eine Schalenfördervorrichtung nach dem Oberbegriff des Anspruchs 7.

Aufgabe der Erfindung ist es, ein Verfahren sowie eine Vorrichtung zum Transportieren von Schalen bereitzustellen, wodurch es möglich ist, abzustapelnde Schalen präzise an eine Transporteinheit zu übergeben, sodass anschließende Arbeitsvorgänge an den Schalen besser durchführbar sind.

Diese Aufgabe wird durch den jeweiligen Gegenstand der Ansprüche 1 und 7 gelöst. Die abhängigen Ansprüche geben jeweils vorteilhafte Ausführungsformen der Erfindung an.

Obwohl der Hintergrund der Erfindung mit Bezug auf das Abstapeln und Abtransportieren von Verpackungen erläutert wurde und auch eine bevorzugte Anwendung der Erfindung auf diesem Gebiet liegt, ist die Erfindung nicht darauf beschränkt, sondern allgemein auf das Abstapeln und Abtransportieren von stapelbaren Schalen aus einem Stapel von Schalen anwendbar.

Die Erfindung bezieht sich auf ein Verfahren zum Betrieb einer Schalenfördervorrichtung gemäß Anspruch 1, umfassend eine Abstapelvorrichtung zum Abstapeln von Schalen, wobei die Abstapelvorrichtung ein Gestell zum Aufnehmen wenigstens eines Schalenstapels sowie mehrere Entstaplerschrauben aufweist. Die Abstapelvorrichtung umfasst ferner eine unterhalb der Abstapelvorrichtung positionierte Transporteinheit zur Aufnahme von abgestapelten Schalen aus der Abstapelvorrichtung. Die Entstaplerschrauben nehmen eine zu entstapelnde Schale an deren Schalenrand auf und setzen diese durch eine kontinuierliche Bewegung auf einer daran helixförmig ausgebildeten Wendel in eine Freigabeposition ab, in welcher die zu entstapelnde Schale auf der Transporteinheit positioniert wird. Durch die Drehbewegung der jeweiligen Entstaplerschrauben wird die daran aufgenommene Schale entlang der Helixbahn linear bis hin zur Transporteinheit versetzt.

Erfindungsgemäß wird der Schalenrand der zu entstapelnden Schale solange in Kontakt entlang einer Auflage der helixförmig ausgebildeten Wendel geführt, bis die Schale auf der Transporteinheit in der Freigabeposition abgesetzt worden ist.

Die Erfindung betrifft somit ein Verfahren zum Betrieb einer Schalenfördervorrichtung, wobei ein Schalenrand einer zu entstapelnden Schale solange in Kontakt entlang einer Führungsauflage geführt wird, bis die Schale auf einer unterhalb positionierten Transporteinheit abgesetzt worden ist. Die Erfindung betrifft auch eine dementsprechende Vorrichtung zum Abstapeln und Weitertransportieren von Schalen.

Demzufolge wird die Schale bis zum Absetzen entlang einer kontinuierlichen Führung getragen, womit eine Übergabe der abzustapelnden Schale an die Transporteinheit präzise durchführbar ist. Damit lässt sich das Absetzen der Schale an einer vorbestimmten Position der Transporteinheit hervorragend kontrollieren.

Bei der Erfindung ist es möglich, die abzustapelnde Schale sanft auf der Transporteinheit abzusetzen, sodass diese auf der Transporteinheit eine vorbestimmte präzise Position einnimmt und nicht etwa in eine unvorhersehbare Position abprallt. Dies liegt primär daran, weil die abzustapelnde Schale solange innerhalb der helixförmig ausgebildeten Wendelführung an der daran ausgebildeten Auflage in Kontakt gehalten wird, bis sie auf der darunter positionierten Transporteinheit aufsitzt. Damit wird ein unkontrolliertes Herabfallen der Schale vermieden, wodurch diese ggf. auf der Transporteinheit verrutschen könnte, d.h. nicht in einer vorbestimmten, präzisen Position für eine Weiterverarbeitung abgestellt wird.

Vorzugsweise ragt der Schalenrand der auf der Transporteinheit abgesetzten Schale zumindest teilweise noch in einen an jeweiligen Enden der Entstaplerschrauben ausgebildeten Freigabebereich kontaktfrei hinein, wenn sich die Schale in der Freigabeposition befindet. Die auf der Transporteinheit angekommene Schale lässt sich damit im Übergabebereich, insbesondere auch bei einem taktweisen Vorschub der Transporteinheit, zuverlässig gegen ein unerwünschtes Verrutschen sichern. Es kann damit auch sichergestellt werden, dass die Schale aus den jeweiligen an den Staplerschrauben ausgebildeten Freigabebereichen lediglich entlang einer vorbestimmten, gewünschten Transportrichtung weitertransportiert wird.

Gemäß einer Variante der Erfindung wird der an den jeweiligen Entstaplerschrauben ausgebildete Freigabebereich dem Schalenrand der in der Freigabeposition abgesetzten Schale zugewandt, um die Schale in Transportrichtung der Transporteinheit freizugeben. Dadurch kann die Schale präzise aus dem Transferbereich heraus zu einer weiter stromabwärts positionierten Befüllungsstation weiter transportiert werden.

Eine Ausführungsform sieht vor, dass der Schalenrand der auf der Transporteinheit abgesetzten Schale zumindest teilweise noch in die helixförmig ausgebildete Wendel der jeweiligen Entstaplerschrauben kontaktfrei hineinragt, wenn sich die Schale in der Freigabeposition befindet. Hier kann die helixförmig ausgebildete Wendel so weit in Richtung der Transporteinheit reichen, dass sie zumindest teilweise den Freigabebereich ausbildet. Diese Ausführung eignet sich besonders gut zum Transport von rechteckigen Schalen und ist kostengünstig herstellbar.

Vorzugsweise werden die Entstaplerschrauben zeitlich abgestimmt hinsichtlich eines Betriebs der Transporteinheit angesteuert. Damit ist ein kontinuierlicher Förderstrom von abzustapelnden Schalen möglich, sodass ein Verpackungsprozess insgesamt verbessert werden kann. Dabei arbeitet die Transporteinheit vorzugsweise mit einem getakteten Vorschub, wobei das Abstellen der Schalen während eines Stillstands der Transporteinheit geschieht. Eine vorteilhafte Variante sieht vor, dass während eines Vorschubtakts der Transporteinheit eine Schale entlang der Entstaplerschrauben transportiert wird, d.h. die an den jeweiligen Entstaplerschrauben ausgebildete Führungsbahn vollständig durchläuft.

Vorzugsweise führt die Transporteinheit die auf ihr abgesetzten Schalen einem Schalenschließvorgang einer taktweise arbeitenden Schalenverschließmaschine zu. Eine präzise Übergabe der Schalen aus der Abstapelvorrichtung auf die Transporteinheit führt ebenfalls im Produktionsfluss weiter stromabwärts insbesondere zu einem verbesserten Schalenschließvorgang, sodass im Ganzen eine höhere Herstellungsqualität mittels der Erfindung erreichbar ist.

Die Erfindung bezieht sich auch auf eine Schalenfördervorrichtung gemäß Anspruch 7, umfassend eine Abstapelvorrichtung zum Abstapeln von Schalen, wobei die Abstapelvorrichtung ein Gestell zum Aufnehmen wenigstens eines Schalenstapels und mehrere Entstaplerschrauben aufweist, die dazu konfiguriert sind, in jeweiligen Drehrichtungen betrieben zu werden, wobei jede Entstaplerschraube - als Führungsbahn - eine helixförmig ausgebildete Wendel mit einer Auflage umfasst. Ferner umfasst die Abstapelvorrichtung eine unterhalb der Abstapelvorrichtung positionierte Transporteinheit zur Aufnahme von abgestapelten Schalen aus der Abstapelvorrichtung.

Erfindungsgemäß sind die Entstaplerschrauben derart ausgebildet, dass ein Schalenrand einer Schale beim Abstapeln der Schale bis zum Aufsetzen der Schale auf der Transporteinheit in Kontakt entlang der Auflage der helixförmig ausgebildeten Wendel geführt ist, wodurch ein sanftes, positionsgenaues Absetzen der abzustapelnden Schalen auf der Transporteinheit möglich ist. Die nacheinander abgesetzten Schalen können somit genau positioniert in vorbestimmten Abständen zueinander weitertransportiert werden.

Vorzugsweise sind die Entstaplerschrauben derart ausgebildet, dass der Schalenrand der auf der Transporteinheit abgesetzten Schale zumindest teilweise noch in einen an jeweiligen Enden der Entstaplerschrauben ausgebildeten Freigabebereich kontaktfrei hineinragt. Die jeweiligen Freigabebereiche legen einen vorbestimmten Toleranzbereich fest, innerhalb dessen die abgesetzten Schalen an einem vorbestimmten Ort auf der Transporteinheit selbst dann gehalten werden können, wenn die Transporteinheit mit sich ändernden, ggf. ruckartigen, Beschleunigungen betrieben wird.

Vorzugsweise umfasst der Freigabebereich eine zumindest abschnittsweise am Ende der Entstaplerschraube ausgebildete Aussparung. Die Geometrie einer jeweiligen Aussparung kann an unterschiedliche Schalenformen, beispielsweise hinsichtlich rechteckigen und/oder runden Schalen, angepasst sein.

Vorzugsweise sind die Entstaplerschrauben derart ausgebildet und synchron ansteuerbar, dass der an den jeweiligen Entstaplerschrauben ausgebildete Freigabebereich dem Schalenrand der in der Freigabeposition abgesetzten Schale zugewandt ist, um einen Weitertransport der Schale in Transportrichtung der Transporteinheit zu gestatten. Somit kommt ein positionsgenauer sowie zielgerichteter Schalenförderstrom in Richtung zu einer weiter stromabwärts positionierten Befüllungsstation zustande.

Eine Variante sieht vor, dass die Entstaplerschrauben derart ausgebildet sind, dass der Schalenrand der auf der Transporteinheit abgesetzten Schale zumindest teilweise noch in die helixförmig ausgebildete Wendel der jeweiligen Entstaplerschrauben kontaktfrei hineinragt. Damit lassen sich die an Enden der jeweiligen Entstaplerschrauben helixförmig auslaufenden Wendeln als Freigabebereiche für unterschiedlich hohe Schalen, vorzugsweise rechteckig ausgebildete Schalenkörper, einsetzen.

Besonders präzise können die Schalen dadurch auf der Transporteinheit abgesetzt werden, wenn die Entstaplerschrauben für einen synchron gesteuerten kontinuierlichen Transport der zu entstapelnden Schalen bis zum Absetzen der Schalen auf der Transporteinheit ausgebildet sind. Die jeweiligen abzustapelnden Schalen können somit mittels eines Linearhubs, ohne Unterbrechung bis hin zur Transporteinheit geführt werden, sodass ein kontrolliertes und sanftes Absetzen darauf möglich ist.

Erfindungsgemäß sind die Entstaplerschrauben am Gestell der Abstapelvorrichtung höhenverstellbar befestigt. Zusätzlich kann die Abstapelvorrichtung insgesamt an der Transporteinheit höhenverstellbar befestigt sein. Die Erfindung ist somit hinsichtlich unterschiedlicher Muldentiefen anwendbar.

Ein besonders fließender Übergang der zu transportierenden Schalen findet zwischen der Abstapelvorrichtung und der Transporteinheit dann statt, wenn ein Antrieb der Entstaplerschrauben zeitlich abgestimmt hinsichtlich eines Betriebs der Transporteinheit ansteuerbar ist. Damit können Produktförderzyklen sowie Herstellungsraten optimiert werden.

Vorzugsweise ist eine Schalenverschließmaschine, auch Traysealer genannt, mit einer erfindungsgemäßen Schalenfördervorrichtung ausgestattet.

Die Erfindung begünstigt auch einen verbesserten hygienischen Betrieb des Verpackungsprozesses, weil dadurch Schritte zum Korrigieren, beispielsweise ein im Anschluss an den Abstapelvorgang durchgeführtes manuelles Zurechtrücken nicht positionsgenau abgestapelter Schalen, vermieden werden können. Des Weiteren können die bei der Erfindung eingesetzten Merkmale kostengünstig hergestellt werden. Der Kern der Erfindung, d.h. die Möglichkeit eines sanften Absetzens von Schalen, um einen präzisen Weitertransport zu gewährleisten, wird daher von weiteren positiven Randeffekten begleitet, die insbesondere vorteilhaft beim Verpacken von Lebensmitteln in Erscheinung treten.

Im Folgenden wir die Erfindung anhand von Ausführungsbeispielen mit Bezug auf die Figuren erläutert. Dabei zeigt
- Fig. 1: eine schematische Darstellung der erfindungsgemäßen Schalenfördervorrichtung als Zuführsystem für einen Traysealer,
- Fig. 2: eine schematische Teildarstellung der erfindungsgemäßen Schalenfördervorrichtung;
- Fig. 3: eine weitere schematische Teildarstellung der erfindungsgemäßen Schalenfördervorrichtung mit einer in der Freigabeposition abgestellten Schale;
- Fig. 4: eine Draufsicht der erfindungsgemäßen Schalenfördervorrichtung mit einer zwischen den Entstaplerschrauben aufgenommenen Schale; und
- Fig. 5: eine schematische Darstellung der erfindungsgemäßen Schalenfördervorrichtung mit einem Höhenverstellmechanismus.

In den Figuren dargestellte technische Merkmale sind durchgehend mit den gleichen Bezugszeichen versehen.

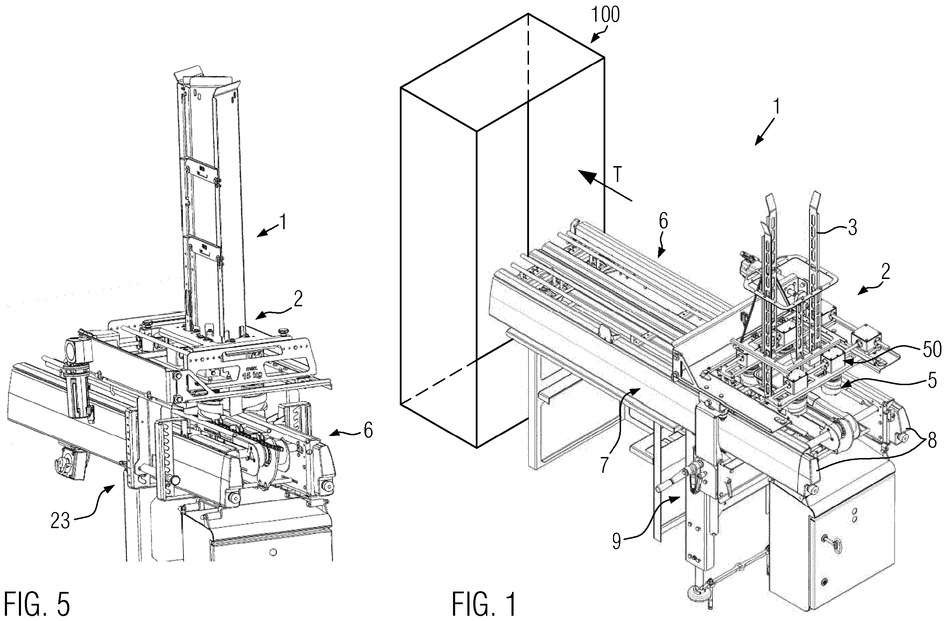

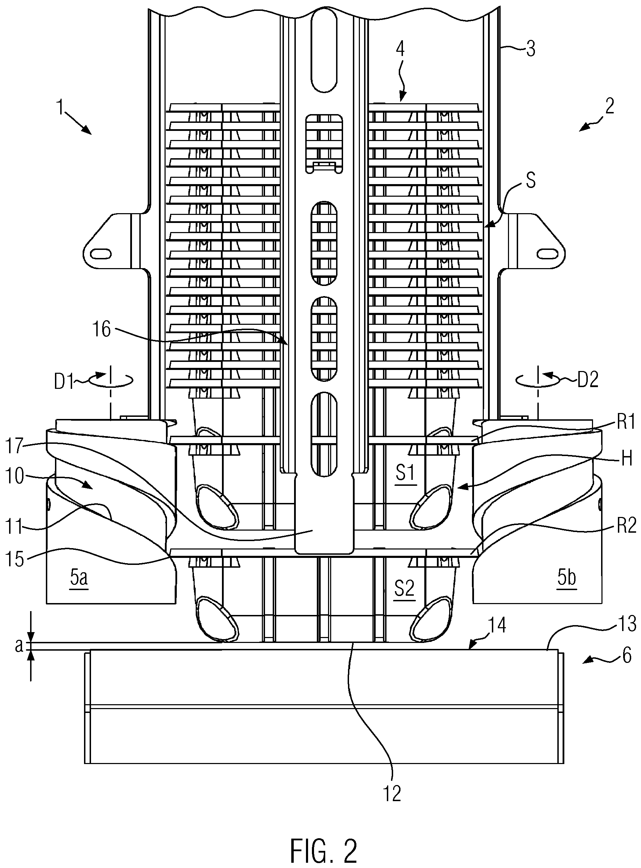

Figur 1 zeigt eine Schalenfördervorrichtung 1. Die Schalenfördervorrichtung 1 umfasst eine Abstapelvorrichtung 2 zum Abstapeln von Schalen S (siehe Figur 2). Die Abstapelvorrichtung 2 weist ein Gestell 3 zum Aufnehmen wenigstens eines Schalenstapels 4 (siehe Figur 2) auf. Ferner umfasst die Abstapelvorrichtung 2 mehrere Entstaplerschrauben 5, die eine zu entstapelnde Schale S an deren Schalenrand R aufnehmen und diese durch eine kontinuierliche Drehbewegung, linear geführt bis zu einem vorbestimmten Niveau herabsetzen können.

Figur 1 zeigt auch, dass unterhalb der Abstapelvorrichtung 2 eine Transporteinheit 6 zur Aufnahme von abgestapelten Schalen S aus der Abstapelvorrichtung 2 positioniert ist. Die Schalenfördervorrichtung 1 umfasst einen Maschinenrahmen 7, der gleichzeitig als Maschinengestellt der Transporteinheit 6 vorliegt. Die Abstapelvorrichtung 2 ist an einem Seitenrahmen 8 des Maschinenrahmens 7 befestigt.

Mittels eines in Figur 1 gezeigten Antriebs 9 ist die Abstapelvorrichtung 2 relativ zum Maschinenrahmen 7 der Schalenfördervorrichtung 1 höhenverstellbar gelagert.

Anhand der Entstaplerschrauben 5 werden einzelne oder gleichzeitig mehrere Schalen S an die darunter positionierte Transporteinheit 6 übergeben, worauf die Schalen S in Transportrichtung T weitertransportiert werden können. Die Abstapelvorrichtung 2 ist, vorzugsweise in einer variierbaren Höhenlage, oberhalb der Transporteinheit 6 montiert. Die Entstaplerschrauben 5 halten die Schalen S während des Abstapelns bis zum Aufsitzen der Schalen S auf der Transporteinheit 6 an sich in Kontakt, sodass die Schalen S immer sanft und präzise an die Transporteinheit 6 übergeben werden.

Figur 2 zeigt in Transportrichtung T das Gestell 3 der Abstapelvorrichtung 2 mit einem darin aufgenommenen Schalenstapel 4, wobei eine erste Schale S1 und eine zweite Schale S2 in Eingriff mit den beiden in Figur 2 gezeigten Entstaplerschrauben 5a, 5b sind. Die Entstaplerschrauben 5a, 5b sind derart ausgebildet, dass sie die daran aufgenommenen Schalen S1, S2 mittels einer an den Schalen S1, S2 ausgeführten Hubbewegung H in Richtung der Transporteinheit 6 absetzen. Dabei werden die Schalen S1, S2 entlang einer an den Entstaplerschrauben 5a, 5b helixförmig ausgebildeten Wendel 10 in Kontakt auf einer daran ausgebildeten Auflage 11 kontrolliert und kontinuierlich anhand einer Drehbewegung der Entstaplerschrauben 5a, 5b bis hin zur Transporteinheit 6 getragen.

Weiter stromabwärts der Schalenfördervorrichtung 1 ist in Figur 2 eine Schalenverschließmaschine 100 schematisch gezeigt. Bevor die Schalen S der Schalenverschließmaschine 100 zugeführt werden, werden diese entlang eines Abschnitts der Transporteinheit 6 mit Produkten befüllt.

Figur 2 zeigt eine Momentaufnahme während des Abstapelns einer Schale S2. Hierbei ist ein Boden 12 der zu entstapelnden Schale S2 in einem Abstand a kurz oberhalb eines Transportbands 13 der Transporteinheit 6 positioniert. Durch eine fortgesetzte Drehbewegung D1, D2 der jeweiligen Entstaplerschrauben 5a, 5b tragen diese die Schale S2 mit sich weiter abnehmendem Abstand a bis hin zur Oberfläche 14 des Transportbands 13.

Ein Schalenrand R2 der Schale S2 bleibt dabei solange mit einer Auflage 11 einer helixförmig ausgebildeten Wendel 10 der jeweiligen Entstaplerschrauben 5a, 5b in Kontakt, bis der Boden 12 der Schale S2 auf der Oberfläche 14 der Transportbands 13 angekommen ist. Hier wird eine Unterkante 15 des Schalenrands R2 solange mittels der Auflage 11 der helixförmig ausgebildeten Wendel 10 unterstützt, bis die Schale S2 auf der Transporteinheit 6 abgesetzt worden ist.

Ferner zeigt Figur 2, dass das Gestellt 3 der Abstapelvorrichtung 2 eine Schiene 16 aufweist, die am Gestell 3 entlang des Schalenstapels 4 befestigt ist. Die Schiene 16 weist ein zur Transporteinheit 6 hingewandtes Schienenende 17 auf, dass derart lang ausgebildet ist, dass es während des mittels der Entstaplerschrauben 5a, 5b durchgeführten Förderhubs H verhindern kann, dass die zu entstapelnden Schalen S1, S2 ungewollt aus den jeweiligen Wendeln 10 der Entstaplerschrauben 5a, 5b herausrutschen.

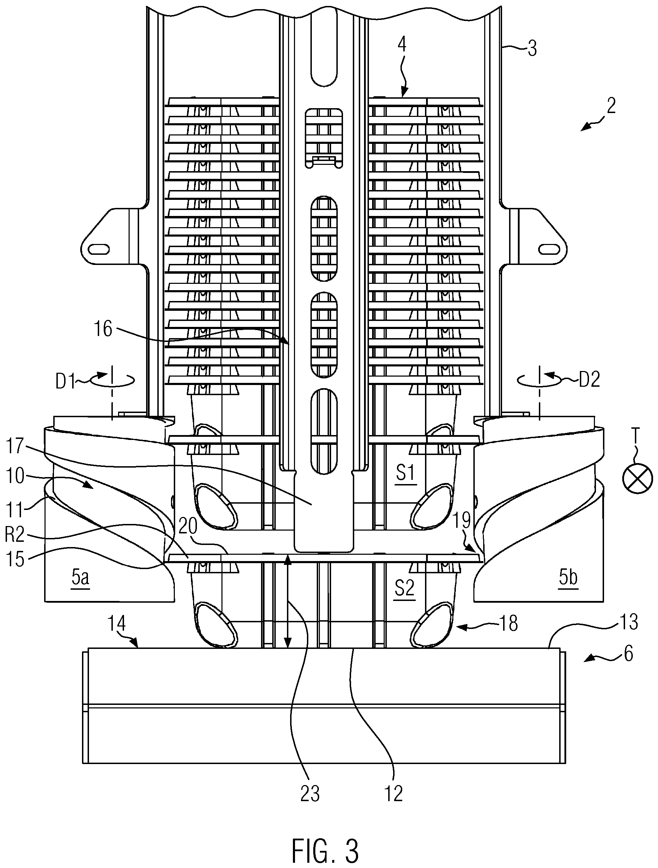

Figur 3 zeigt die Schale S2 in einer Freigabeposition 18. In der Freigabeposition 18 sitzt der Boden 12 der Schale S2 auf dem Transportband 13 der Transporteinheit 6 auf. Die Unterkante 15 des Schalenrands R2 ist jetzt nicht mehr mit der Auflage 11 der helixförmig ausgebildeten Wendel 10 in Kontakt, sondern ist innerhalb eines Freigabebereichs 19 kontaktfrei positioniert.

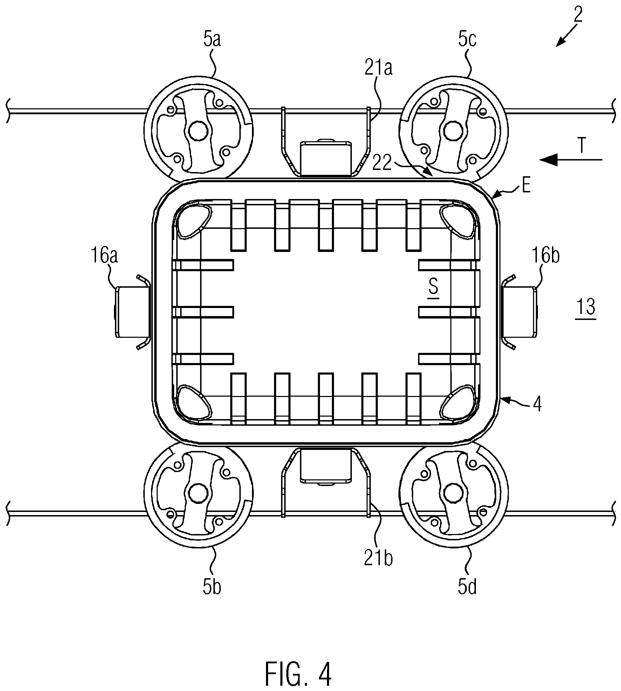

In der Freigabeposition 18 angekommen ist die Schale S2 nicht mehr mit den Entstaplerschrauben 5a, 5b in Kontakt. Der Freigabebereich 19 wird gemäß Figur 3 durch ein auslaufendes Ende der helixförmig ausgebildeten Wendel 10 gebildet. Auch zwei weitere, allerdings nicht in der Figur 3 gezeigte Entstaplerschrauben 5c, 5d (siehe Figur 4), die in Bildebene hinter den Entstaplerschrauben 5a, 5b angeordnet sind, sind entsprechend den Entstaplerschrauben 5a, 5b der Schale S2 zugewandt positioniert.

Figur 3 zeigt auch, dass eine Oberkante 20 der abgesetzten Schale S2 knapp unterhalb des Schienenendes 17 positioniert ist, sodass die Schale S2 entlang des Transportbands 13 in Transportrichtung T aus dem Freigabebereich 19 der Entstaplerschrauben 5a, 5b heraustransportiert werden kann.

Figur 4 zeigt eine Draufsicht in den Bereich der jeweiligen Entstaplerschrauben 5a, 5b, 5c, 5d mit einer dazwischen aufgenommenen Schale S, jeweiligen als Führung eingesetzten Schienen 16a, 16b sowie seitlichen Gestellteilen 21a, 21b, die ebenfalls zur Sicherung einer geradlinigen Führung zu entstapelnder Schalen S einsetzbar sind.

Die jeweiligen Entstaplerschrauben 5a, 5b, 5c, 5d sind Eckbereichen E der Schale S zugeordnet. Wenn die Schale S auf dem Transportband 13 abgesetzt worden ist, ragen die jeweiligen Eckbereiche E der Schale S in den Freigabebereich 19 der jeweiligen Entstaplerschrauben 5a, 5b, 5c, 5d hinein, d.h. die jeweiligen Freigabebereiche 19 sind den Eckbereichen E der Schale S zugewandt.

Die Freigabebereiche 19 haben jeweils eine Aussparung 22, die jeweils am Ende der Entstaplerschraube 5a, 5b, 5c, 5d zur Freigabe der abgesetzten Schale S konfiguriert ist, damit die Schale S kontaktfrei aus dem Freigabebereich 19 der Entstaplerschrauben 5a, 5b, 5c, 5d heraus transportiert werden kann.

Figur 5 zeigt die Schalenfördervorrichtung 1 mit einem Höhenverstellmechanismus 23 für die Abstapelvorrichtung 2, damit diese oberhalb der Transporteinheit 6 relativ zum unterhalb durchgeführten Transportband 13 in unterschiedlichen Höhenlagen positionierbar ist. Mittels des Höhenverstellmechanismus 23 kann die Abstapelvorrichtung 2 deshalb hinsichtlich einer variierenden in Figur 3 gezeigten Muldentiefe 23 höhenverstellt werden, damit sich unterschiedlich hohe Schalen S gemäß dem erfinderischen Prinzip sanft auf der Transporteinheit 6 absetzen lassen.

Dank der vorliegenden Erfindung können abzustapelnde Schalen entlang einer vertikalen Führungsbahn fließend, sanft und kontrolliert in eine horizontale Transportebene überführt werden, weil die Schalen von der vertikal ausgelegten Führungsbahn erst dann freigegeben werden, wenn die Schalen in der horizontalen Transportebene angekommen sind. Dies ermöglicht einen positionsgenauen Transportübergabevorgang, um die Schalen präzise einem nachgelagerten, weiter stromabwärts positionierten Befüllungsvorgang zuzuführen.

## Patentansprüche

1. Verfahren zum Betrieb einer Schalenfördervorrichtung (1), umfassend eine Abstapelvorrichtung (2) zum Abstapeln von Schalen (S), wobei die Abstapelvorrichtung (2) ein Gestell (3) zum Aufnehmen wenigstens eines Schalenstapels (4) sowie mehrere Entstaplerschrauben (5) aufweist, und ferner umfassend eine unterhalb der Abstapelvorrichtung (2) positionierte Transporteinheit (6) zur Aufnahme von abgestapelten Schalen (S) aus der Abstapelvorrichtung (2), wobei die Entstaplerschrauben (5) eine zu entstapelnde Schale (S) an deren Schalenrand (R) aufnehmen und diese durch eine kontinuierliche Drehbewegung (D) auf einer daran helixförmig ausgebildeten Wendel (10) in eine Freigabeposition (18) absetzen, in welcher die zu entstapelnde Schale (S) auf der Transporteinheit (6) positioniert wird, **dadurch gekennzeichnet, dass** der Schalenrand (R) der zu entstapelnden Schale (S) solange in Kontakt entlang einer Auflage (11) der helixförmig ausgebildeten Wendel (10) geführt wird, bis die Schale (S) auf der Transporteinheit (6) in der Freigabeposition (18) abgesetzt worden ist.

2. Verfahren nach Anspruch 1, **dadurch gekennzeichnet, dass** der Schalenrand (R) der auf der Transporteinheit (6) abgesetzten Schale (S) zumindest teilweise noch in einen an jeweiligen Enden der Entstaplerschrauben (5) ausgebildeten Freigabebereich (19) kontaktfrei hineinragt, wenn sich die Schale (S) in der Freigabeposition (18) befindet.

3. Verfahren nach Anspruch 2, **dadurch gekennzeichnet, dass** der an den jeweiligen Entstaplerschrauben (5) ausgebildete Freigabebereich (19) dem Schalenrand (R) der in der Freigabeposition (18) abgesetzten Schale (S) zugewandt wird, um die Schale (S) in Transportrichtung (T) der Transporteinheit (6) freizugeben.

4. Verfahren nach einem der vorigen Ansprüche, **dadurch gekennzeichnet, dass** der Schalenrand (R) der auf der Transporteinheit (6) abgesetzten Schale (S) zumindest teilweise noch in die helixförmig ausgebildete Wendel (10) der jeweiligen Entstaplerschrauben (5) kontaktfrei hineinragt, wenn sich die Schale (S) in der Freigabeposition (18) befindet.

5. Verfahren nach einem der vorigen Ansprüche, **dadurch gekennzeichnet, dass** die Entstaplerschrauben (5) zeitlich abgestimmt hinsichtlich eines Betriebs der Transporteinheit (6) angesteuert werden.

6. Verfahren nach einem der vorigen Ansprüche, **dadurch gekennzeichnet, dass** die Transporteinheit (6) die auf ihr abgesetzten Schalen (S) einem Schalenverschließvorgang einer taktweise arbeitenden Schalenverschließmaschine (100) zuführt.

7. Schalenfördervorrichtung (1), umfassend eine Abstapelvorrichtung (2) zum Abstapeln von Schalen (S), wobei die Abstapelvorrichtung (2) ein Gestell (3) zum Aufnehmen wenigstens eines Schalenstapels (4) und mehrere Entstaplerschrauben (5) aufweist, die dazu konfiguriert sind, in jeweils einer Drehrichtung (D) betrieben zu werden, wobei jede Entstaplerschraube (5) eine helixförmig ausgebildete Wendel (10) mit einer Auflage (11) umfasst, und ferner umfassend eine unterhalb der Abstapelvorrichtung (2) positionierte Transporteinheit (6) zur Aufnahme von abgestapelten Schalen (S) aus der Abstapelvorrichtung (2), **dadurch gekennzeichnet, dass** die Entstaplerschrauben (5) am Gestell (3) der Abstapelvorrichtung (2) höhenverstellbar befestigt sind, wobei die Entstaplerschrauben (5) derart ausgebildet sind, dass ein Schalenrand (R) einer Schale (S) beim Abstapeln der Schale (S) bis zum Aufsetzen der Schale (S) auf der Transporteinheit (6) in Kontakt entlang der Auflage (11) der helixförmig ausgebildeten Wendel (10) geführt ist.

8. Schalenfördervorrichtung nach Anspruch 7, **dadurch gekennzeichnet, dass** die Entstaplerschrauben (5) derart ausgebildet sind, dass der Schalenrand (R) der auf der Transporteinheit (6) abgesetzten Schale (S) zumindest teilweise noch in einen an jeweiligen Enden der Entstaplerschrauben (5) ausgebildeten Freigabebereich (19) kontaktfrei hineinragt.

9. Schalenfördervorrichtung nach Anspruch 8, **dadurch gekennzeichnet, dass** der Freigabebereich (19) anhand einer am Ende der Entstaplerschraube (5) ausgebildeten Aussparung (22) gebildet ist.

10. Schalenfördervorrichtung nach einem der Ansprüche 7 bis 9, **dadurch gekennzeichnet, dass** die Entstaplerschrauben (5) derart synchron ansteuerbar sind, dass der an den jeweiligen Entstaplerschrauben (5) ausgebildete Freigabebereich (19) dem Schalenrand (R) der in der Freigabeposition (18) abgesetzten Schale (S) zugewandt ist, um die Schale (S) in Transportrichtung (T) der Transporteinheit (6) freizugeben.

11. Schalenfördervorrichtung nach einem der Ansprüche 7 bis 10, **dadurch gekennzeichnet, dass** die Entstaplerschrauben (5) derart ausgebildet sind, dass der Schalenrand (R) der auf der Transporteinheit (6) abgesetzten Schale zumindest teilweise noch in die helixförmig ausgebildete Wendel (10) der jeweiligen Entstaplerschrauben (5) kontaktfrei hineinragt.

12. Schalenfördervorrichtung nach einem der vorigen Ansprüche 7 bis 11, **dadurch gekennzeichnet, dass** die Entstaplerschrauben (5) für einen synchron gesteuerten kontinuierlichen Transport der zu entstapelnden Schalen (S) bis zum Absetzen der Schalen (S) auf der Transporteinheit (6) ausgebildet sind.

13. Schalenfördervorrichtung nach einem der Ansprüche 7 bis 12, **dadurch gekennzeichnet, dass** die Abstapelvorrichtung (2) an der Transporteinheit (6) höhenverstellbar befestigt ist.

14. Schalenfördervorrichtung nach einem der Ansprüche 7 bis 13, **dadurch gekennzeichnet, dass** ein Antrieb (50) der Entstaplerschrauben (5) zeitlich abgestimmt hinsichtlich eines Betriebs der Transporteinheit (6) ansteuerbar ist.

15. Schalenverschließmaschine (100) mit einer Schalenfördervorrichtung (1) gemäß einem der vorigen Ansprüche 7 bis 14.

## Claims

1. A method for operating a tray conveying apparatus (1), comprising a destacker (2) for destacking trays (S), wherein the destacker (2) comprises a frame (3), used for accommodating at least one tray stack (4), as well as a plurality of destacking screws (5), and further comprising a conveying unit (6) positioned below the destacker (2) and used for taking up destacked trays (S) from the destacker (2), wherein the destacking screws (5) take hold of a tray (S) to be destacked on the tray edge (R) thereof and, through a continuous rotational movement (D) at a spiral (10) that is helically formed on the destacking screws (5), they deposit the tray (S) at a release position (18), at which the tray (S) to be destacked is placed on the conveying unit (6), **characterized in that** the tray edge (R) of the tray (S) to be destacked is guided in contact with and along a support (11) of the helically configured spiral (10) until the tray (S) has been deposited on the conveying unit (6) at the release position (18).

2. The method according to claim 1, **characterized in that** the tray edge (R) of the tray (S) deposited on the conveying unit (6) projects, in a contact-free manner, at least partially into a release area (19) formed at respective ends of the destacking screws (5), when the tray (S) is at the release position (18).

3. The method according to claim 2, **characterized in that** the release area (19) formed at the respective destacking screws (5) will be arranged to face the tray edge (R) of the tray (S) deposited at the release position (18), so as to release the tray (S) in the conveying direction (T) of the conveying unit (6).

4. The method according to one of the preceding claims, **characterized in that** the tray edge (R) of the tray (S) deposited on the conveying unit (6) projects, in a contact-free manner, at least partially into the helically configured spiral (10) of the respective destacking screws (5), when the tray (S) is at the release position (18).

5. The method according to one of the preceding claims, **characterized in that** the destacking screws (5) are controlled in synchronization with respect to an operation of the conveying unit (6).

6. The method according to one of the preceding claims, **characterized in that** the conveying unit (6) feeds the trays (S) deposited thereon to a tray sealing process of a cyclically operating tray sealer (100).

7. A tray conveying apparatus (1), comprising a destacker (2) for destacking trays (S), wherein the destacker (2) comprises a frame (3) for accommodating at least one tray stack (4) and a plurality of destacking screws (5) configured to be operated in a respective direction of rotation (D), each destacking screw (5) comprising a helically configured spiral (10) with a support (11), and further comprising a conveying unit (6) positioned below the destacker (2) and used for receiving thereon destacked trays (S) from the destacker (2), **characterized in that** the destacking screws (5) are attached to the frame (3) of the destacker (2) in a vertically adjustable manner, wherein the destacking screws (5) are configured such that, during destacking of a tray (S), a tray edge (R) of the tray (S) is guided in contact with and along the support (11) of the helically configured spiral (10) until the tray (S) comes to rest on the conveying unit (6).

8. The tray conveying apparatus according to claim 7, **characterized in that** the destacking screws (5) are configured such that the tray edge (R) of the tray (S) deposited on the conveying unit (6) projects, in a contact-free manner, at least partially into a release area (19) formed at respective ends of the destacking screws (5).

9. The tray conveying apparatus according to claim 8, **characterized in that** the release area (19) is formed on the basis of a recess formed at the end of the destacking screw (5).

10. The tray conveying apparatus according to one of the claims 7 to 9, **characterized in that** the destacking screws (5) are synchronously controllable such that the release area (19) formed at the respective destacking screws (5) faces the tray edge (R) of the tray (S) deposited at the release position (18), so as to release the tray (S) in the conveying direction (T) of the conveying unit (6).

11. The tray conveying apparatus according to one of the claims 7 to 10, **characterized in that** the destacking screws (5) are configured such that the tray edge (R) of the tray deposited on the conveying unit (6) projects, in a contact free manner, at least partially into the helically configured spiral (10) of the respective destacking screws (5).

12. The tray conveying apparatus according to one of the preceding claims 7 to 11, **characterized in that** the destacking screws (5) are configured for continuously conveying, in a synchronously controlled manner, the trays (S) to be destacked until the trays (S) are deposited on the conveying unit (6).

13. The tray conveying apparatus according to one of the claims 7 to 12, **characterized in that** destacker (2) is attached to the conveying unit (6) in a vertically adjustable manner.

14. The tray conveying apparatus according to one of the claims 7 to 13, **characterized in that** a drive (50) of the destacking screws (5) is controllable in synchronization with respect to an operation of the conveying unit (6).

15. A tray sealer (100) comprising a tray conveying apparatus (1) according to one of the claims 7 to 14.

## Revendications

1. Procédé de fonctionnement d'un dispositif de transport de barquettes (1), comprenant un dispositif de dépilage (2) permettant de dépiler des barquettes (S), dans lequel le dispositif de dépilage (2) présente un châssis (3) permettant d'accueillir au moins une pile de barquettes (4) ainsi que plusieurs vis de dépilage (5), et comprenant en outre une unité de transport (6) positionnée sous le dispositif de dépilage (2) et permettant d'accueillir des barquettes (S) dépilées issues du dispositif de dépilage (2), dans lequel les vis de dépilage (5) accueillent une barquette (S) à dépiler au niveau du bord de barquette (R) de ladite barquette et la déposent, grâce à un mouvement de rotation continu (D) sur une tige à filet (10) réalisée de manière hélicoïdale, dans une position de libération (18) dans laquelle la barquette (S) à dépiler est positionnée sur l'unité de transport (6), **caractérisé en ce que** le bord de la barquette (R) de la barquette (S) à dépiler est guidé en maintenant un contact le long d'un appui (11) de la tige à filet (10) réalisée de manière hélicoïdale jusqu'à ce que la barquette (S) ait été déposée sur l'unité de transport (6) dans la position de libération (18).

2. Procédé selon la revendication 1, **caractérisé en ce que** le bord de barquette (R) de la barquette (S) déposée sur l'unité de transport (6) fait saillie encore au moins partiellement, sans venir en contact, dans une région de libération (19) formée aux extrémités respectives des vis de dépilage (5) lorsque la barquette (S) se trouve dans la position de libération (18).

3. Procédé selon la revendication 2, **caractérisé en ce que** la région de libération (19) formée au niveau des vis de dépilage (5) respectives est tournée vers le bord de barquette (R) de la barquette (S) déposée dans la position de libération (18) afin de libérer la barquette (S) dans la direction de transport (T) de l'unité de transport (6).

4. Procédé selon l'une quelconque des revendications précédentes, **caractérisé en ce que** le bord de barquette (R) de la barquette (S) déposée sur l'unité de transport (6) fait saillie encore au moins partiellement, sans venir en contact, dans la tige à filet (10) réalisée de manière hélicoïdale des vis de dépilage (5) respectives lorsque la barquette (S) se trouve dans la position de libération (18).

5. Procédé selon l'une quelconque des revendications précédentes, **caractérisé en ce que** les vis de dépilage (5) sont commandées de manière synchronisée par rapport au fonctionnement de l'unité de transport (6).

6. Procédé selon l'une quelconque des revendications précédentes, **caractérisé en ce que** l'unité de transport (6) achemine les barquettes (S) déposées sur ladite unité de transport jusqu'à une étape de fermeture de barquette d'une machine de fermeture de barquettes (100) fonctionnant de manière cadencée.

7. Dispositif de transport de barquettes (1) comprenant un dispositif de dépilage (2) permettant de dépiler des barquettes (S), dans lequel le dispositif de dépilage (2) comprend un châssis (3) permettant d'accueillir au moins une pile de barquettes (4) et plusieurs vis de dépilage (5) configurées pour être utilisées dans respectivement un sens de rotation (D), dans lequel chaque vis de dépilage (5) comprend une tige à filet (10) réalisée de manière hélicoïdale et munie d'un appui (11), et comprenant en outre une unité de transport (6) positionnée sous le dispositif de dépilage (2) afin d'accueillir des barquettes (S) dépilées issues du dispositif de dépilage (2), **caractérisé en ce que** les vis de dépilage (5) sont fixées au châssis (3) du dispositif de dépilage (2) de manière réglable en hauteur, dans lequel les vis de dépilage (5) sont réalisées de telle manière qu'un bord de barquette (R) d'une barquette (S) est guidé en maintenant un contact le long de l'appui (11) de la tige à filet (10) réalisée de manière hélicoïdale lors du dépilage de la barquette (S) jusqu'à la mise en place de la barquette (S) sur l'unité de transport (6).

8. Dispositif de transport de barquettes selon la revendication 7, **caractérisé en ce que** les vis de dépilage (5) sont réalisées de telle manière que le bord de barquette (R) de la barquette (S) déposée sur l'unité de transport (6) fait saillie encore au moins partiellement, sans venir en contact, dans une région de libération (19) réalisée aux extrémités respectives des vis de dépilage (5).

9. Dispositif de transport de barquettes selon la revendication 8, **caractérisé en ce que** la région de libération (19) est formée à l'aide d'un évidement (22) réalisé à l'extrémité de la vis de dépilage (5).

10. Dispositif de transport de barquettes selon l'une quelconque des revendications 7 à 9, **caractérisé en ce que** les vis de dépilage (5) peuvent être commandées de manière synchrone de telle manière que la région de libération (19) formée au niveau des vis de dépilage (5) respectives est tournée vers le bord de barquette (R) de la barquette (S) déposée dans la position de libération (18) afin de libérer la barquette (S) dans la direction de transport (T) de l'unité de transport (6).

11. Dispositif de transport de barquettes selon l'une quelconque des revendications 7 à 10, **caractérisé en ce que** les vis de dépilage (5) sont réalisées de telle manière que le bord de barquette (R) de la barquette déposée sur l'unité de transport (6) fait saillie encore au moins partiellement, sans venir en contact, dans la tige à filet (10) réalisée de manière hélicoïdale des vis de dépilage (5) respectives.

12. Dispositif de transport de barquettes selon l'une quelconque des revendications précédentes 7 à 11, **caractérisé en ce que** les vis de dépilage (5) sont réalisées en vue d'un transport continu commandé de manière synchrone des barquettes (S) à dépiler jusqu'à la dépose des barquettes (S) sur l'unité de transport (6).

13. Dispositif de transport de barquettes selon l'une quelconque des revendications 7 à 12, **caractérisé en ce que** le dispositif de dépilage (2) est fixé sur l'unité de transport (6) de manière réglable en hauteur.

14. Dispositif de transport de barquettes selon l'une quelconque des revendications à 13, **caractérisé en ce qu'**un entraînement (50) des vis de dépilage (5) peut être commandé de manière synchronisée par rapport au fonctionnement de l'unité de transport (6).

15. Machine de scellage de barquettes (100) comprenant un dispositif de transport de barquettes (1) selon l'une quelconque des revendications précédentes 7 à 14.
